# DEMANDE DE BREVET EUROPEEN

(11) **EP 3 254 847 A1**
(43) Date de publication de la demande: **13.12.2017**
(21) Numéro de dépôt: 16173732.5
(22) Date de dépôt: 09.06.2016
(51) Int. Cl.: B32B 17/06, E06B 3/663, E06B 5/16, E06B 3/54

(54) **VITRAGE ANTI-FEU**

(71) Demandeur: AGC Glass Europe, 1348 Louvain-la-Neuve (BE)
(72) Inventeur: LESCOT, Thomas, 6210 Reves (BE); BOUESNARD, Olivier, 1460 Ittre (BE); BOUCHER, Nicolas, 7190 Ecaussinnes-d'Enghien (BE)
(74) Mandataire: Le Vaguerèse, Sylvain Jacques

(57) **Abrégé**

Paroi vitrée (5) comportant au moins deux vitrages (1-4) disposés bord à bord, ces vitrages résistant au feu et comprenant chacun deux feuilles de verre (7,8) entre lesquelles se trouve un matériau intumescent (9) à base de silicate alcalin hydraté, les deux feuilles de verre étant réunies à leur périphérie par un ensemble d'éléments espaceurs (10) délimitant entre ces deux feuilles un espace dans lequel une composition liquide du silicate alcalin est versée de manière à remplir cet espace, la composition étant choisie pour conduire à un gel solide éventuellement cette solidification étant accélérée par une élévation de température ou une exposition à des rayons UV ou IR, les éléments délimitant cet espace étant étanches à la composition liquide de silicates, ces éléments comportant au moins sur les bords des vitrages contigus des éléments d'espaceurs (10) rigides ou semi-rigides constitués dans un matériau essentiellement transparent à la lumière visible.

## Description

L'invention concerne des vitrages résistant au feu comprenant un matériau intumescent à base de silicates alcalins hydratés entre des feuilles de verre. Plus précisément l'invention concerne les grandes parois vitrées comprenant plusieurs vitrages disposés les uns à côté des autres. Des parois de ce type sont connues de divers documents antérieurs notamment BE1011593.

Les utilisateurs de ces parois vitrées comportant plusieurs vitrages mis bord-à-bord, recherchent le plus possible l'apparence d'une paroi sans discontinuité. Il s'agit, dans la mesure du possible de s'approcher de l'apparence qu'aurait un vitrage unique. Pour cela il faut faire en sorte de minimiser tout élément rapporté sur cette paroi qui rompt l'uniformité. Cet objectif se heurte traditionnellement à la présence sur ces parois d'éléments qui font obstacle à la transmission lumineuse. C'est en particulier le cas des moyens qui sont disposés sur les bords des vitrages contigus lorsque ceux-ci ne sont pas par construction masqués par des cadres.

De tels éléments ont notamment pour but de solidariser les vitrages contigus pour les maintenir dans leurs positions respectives lors des diverses sollicitations auxquelles ces parois peuvent être soumises. En particulier pour ce qui concerne les vitrages anti-feu, les sollicitations les plus fortes sont celles liées aux épreuves thermiques. En cas d'exposition au feu les différents vitrages constituant la paroi doivent maintenir les propriétés qui seraient celles attendues d'un vitrage unique. La jonction entre les différents vitrages ne doit pas réduire l'étanchéité aux flammes ou à la chaleur.

Les vitrages anti-feu, notamment ceux décrits dans le document cité, sont constitués essentiellement de feuilles de verre entre lesquelles est disposé un matériau intumescent à base de silicate alcalin séché. Le cas échéant le vitrage peut comporter plusieurs couches de ce matériau, chaque fois entre deux feuilles de verre. Les vitrages constitués avec ces matériaux intumescents présentent l'avantage d'être produits en grandes dimensions qui se prêtent ultérieurement à une découpe aux dimensions adaptées à la mise en oeuvre précise envisagée. Les bords des vitrages doivent seulement être protégés de l'altération qui peut provenir du contact avec l'atmosphère environnante et notamment de l'humidité responsable de l'altération de la transparence du matériau intumescent. L'absorption d'humidité conduit en effet à la formation d'un voile si aucune protection n'est aménagée sur ces bords. Pour prévenir la formation de ce type de défaut les bords des vitrages sont traditionnellement revêtus avec un matériau faisant obstacle au passage de l'humidité. C'est par exemple la présence sur les bords du vitrage, et plus particulièrement sur le bord du matériau intumescent, d'un revêtement au moyen d'un matériau polymère étanche à l'humidité et qui simultanément protège ce bord des possibles altérations de stockage, transport ou mise en oeuvre.

Les vitrages anti-feu dont le matériau intumescent est séché jusqu'à solidification, indépendamment de leurs qualités, soulèvent des problèmes particuliers liés à cette opération de séchage. Dans la pratique, compte tenu de la longueur de l'opération, les couches produites sont toujours d'épaisseur limitée. Cette épaisseur ne dépasse pas ordinairement 1,5mm. Les performances de résistance au feu sont notamment fonction des épaisseurs de matériau intumescent inclus dans ces vitrages. Pour atteindre les performances les plus élevées, la pratique est en conséquence de multiplier les couches de matériau et, par voie de conséquence, le nombre des feuilles de verre auxquelles ces couches sont associées. Il en résulte des vitrages épais et très pesants.

Un autre type de vitrage anti-feu traditionnel permet de réaliser des couches de matériau intumescent qui ne sont pas limitées en épaisseur par des questions de séchage. Il s'agit des vitrages dans lesquels la composition du matériau intumescent, toujours à base de silicates alcalins, est telle que son durcissement s'opère spontanément sans séchage, éventuellement en procédant à un chauffage ou à une exposition aux rayons IR ou UV. La solidification du matériau intervient directement sur le produit massif et non par séchage à partir de la surface libre exposée à l'atmosphère. Ces compositions de silicates, initialement liquides, remplissent un espace défini par deux feuilles de verre réunies au moyen d'un élément disposé à la périphérie de ces feuilles. Cet élément dit «espaceur» maintient les feuilles de verre à distance l'une de l'autre et, avec ces feuilles, fait étanchéité vis-à-vis de la composition de silicate liquide. La production de ce type de vitrage et des compositions de silicates utilisées dans ce type de vitrage sont décrites notamment dans les publications WO 2007/107541 et WO 2008/145611.

Dans tous les vitrages anti-feu produits au moyen de ces compositions de silicates coulées entre les feuilles, et durcies sans séchage, le choix des espaceurs conditionne en partie la qualité du produit final, et en particulier l'absence de défauts tels que la présence de bulles, de coloration indésirable, ou la présence dans le matériau intumescent d'un voile notamment à la périphérie.

La présence d'espaceurs, dans les vitrages, produits comme indiqué précédemment sans séchage, est contraire au but recherché de disposer de parois comprenant plusieurs vitrages juxtaposés et dont aucun élément ne fait un obstacle significatif à la lumière. Pour cette raison notamment de tels vitrages n'ont pas connus d'application significative en dépit d'une publication à ce sujet WO 2010/097179. Il est remarquable de constater que dans cette publication la jonction de deux vitrages à bords contigus comprend des montants de fixation qui s'étendent sur toute la hauteur de ces vitrages, montants décrits comme collés aux feuilles de verre de part et d'autre du vitrage. Selon la description ces montants profilés sont en acier. Ils dissimulent tous les éléments des vitrages au niveau de leurs bords et notamment les espaceurs. Ceux-ci sont décrits avec pour seule caractéristique le fait d'être résistant au produit intumescent et au feu.

Rien dans ce document n'envisage la constitution de parois dépourvues de ces éléments opaques. Ceci est à rapprocher des propositions concernant l'utilisation d'espaceurs dans des vitrages anti-feu du type considéré, mais qui n'entrent pas dans la composition de parois constituées de plusieurs vitrages jointifs. Les qualités recherchées précédemment pour ces vitrages sont rappelées ci-dessous.

Dans le rôle de maintien de la composition les espaceurs doivent bien entendu offrir une bonne étanchéité notamment au moment du remplissage avec la composition liquide. Ils doivent aussi ne pas être altérés par le contact avec la composition de silicates laquelle est très fortement basique. Ils doivent encore adhérer fortement aux feuilles de verre pour s'opposer aux déformations possibles des vitrages du fait que, même durcies, ces compositions dont la teneur en eau est élevée, sont sensibles au fluage sous leur propre poids.

Différentes solutions ont été proposées pour constituer ces espaceurs, notamment l'utilisation d'un joint extrudé de caoutchouc butyle (EP1205524). Ce type de matériau offre l'avantage de permettre une bonne adhérence aux feuilles de verre, et de compenser les irrégularités de planéité de ces feuilles, assurant ainsi une bonne étanchéité. Pour donner à ce caoutchouc une bonne résistance aux UV, et une rigidité suffisante pour maintenir la distance entre les feuilles de verre, il comporte ordinairement des charges minérales et/ou de carbone. Ces caoutchoucs offrent une certaine commodité de mise en oeuvre, la géométrie du joint et son application étant réalisées par extrusion directement sur les bords des feuilles de verre quelles que soient leur dimensions. Ces opérations se prêtent aussi à une certaine automatisation.

L'utilisation d'espaceurs de caoutchouc butyle cependant ne permet pas d'éviter totalement une réaction avec la composition de silicate liquide, et la formation éventuelle de bulles qui nuisent à la qualité du vitrage.

Les caoutchoucs de silicone ont aussi été proposés en remplacement des caoutchoucs butyle, pour une meilleure résistance chimique au contact avec les silicates.

D'autres matériaux d'espaceurs ont été encore proposés, en particulier des espaceurs métalliques du type de ceux mis en oeuvre dans les vitrages doubles isolants. Ceux-ci nécessitent une parfaite stabilité au contact de la composition de silicates. Certains matériaux peuvent donner lieu à une coloration de la composition par attaque du métal de l'espaceur. Par ailleurs l'utilisation de constituants métalliques dont le coefficient de dilatation thermique est sensiblement différent de celui des feuilles de verre apparaît aussi comme déconseillé dans la littérature antérieure (EP 0 753 639). Même si pour ces vitrages les feuilles de verre utilisées sont trempées, le risque lors de l'épreuve au feu, est de briser les feuilles de manière prématurée en raison de ces différences de dilatation. Pour cette raison le document cité propose l'utilisation d'espaceurs en matériau céramique de coefficient de dilatation analogue à celui des feuilles de verre.

Les vitrages anti-feu antérieurs du type considéré, comme rappelé ci-dessus, comportent des éléments, notamment des espaceurs, qui n'offrent pas une transparence comparable à celle des feuilles de verre ou des compositions de silicates alcalins. Cette absence de transparence, en dehors de réduction du flux lumineux, est surtout dommageable à l'esthétique des parois constituées au moyen de ces vitrages.

L'invention a pour but de fournir des parois vitrées comportant plusieurs vitrages contigus, offrant une meilleure uniformité de transmission du flux lumineux y compris dans les parties situées sur les bords contigus des vitrages constituant ces parois.

Le flux de lumière est soit sous forme de transmission directe par transparence permettant de distinguer nettement les objets situés derrière les éléments d'espaceur transparents, mais le flux de lumière peut aussi être diffus, ces éléments étant alors éventuellement plus ou moins translucides selon la proportion du flux diffusé. Les deux modes de transmission peuvent aussi être combinés.

Dans ce but, les espaceurs des vitrages composant ces parois sont choisis dans un matériau essentiellement transparent.

Par essentiellement transparent on entend un matériau tel que les espaceurs laissent passer un flux lumineux visible (direct et diffusé) d'au moins 50% du flux incident.

Selon l'invention les matériaux constituant ces espaceurs sont de préférence tels que sous une épaisseur de 10mm ils offrent une transmission lumineuse qui n'est pas inférieure à 50%, et de préférence pas inférieure à 60%.

Indépendamment de la transmission lumineuse, pour répondre au mieux à l'exigence de transparence telle qu'elle est requise des feuilles de verre et du matériau intumescent, le matériau des espaceurs présente avantageusement une diffusion lumineuse («haze») sous 10mm d'épaisseur, qui n'est pas supérieure à 60, et de préférence pas supérieure à 30% du flux incident.

Dans les parois vitrées selon l'invention la distance entre les bords des vitrages contigus est aussi petite que possible pour permettre leur mise en place. Cette distance de préférence est au plus de 7mm et de façon particulièrement préférée au plus de 5mm.

La distance entre les vitrages contigus dans ce type de paroi est systématiquement comblée par un joint assurant l'étanchéité de la paroi. Le matériau de ce joint selon l'invention contribue avantageusement à la réalisation du but recherché de transmission du flux lumineux. Pour satisfaire ces exigences le joint est de préférence constitué d'un matériau polymère. Un matériau préféré selon l'invention est une résine transparente de silicone. Ces résines ont l'avantage de bien adhérer au bord des feuilles de verre et de se prêter à une mise en place par extrusion.

Quel que soit le matériau de ce joint, pour contribuer à la réalisation du but de l'invention, sa transmission du flux lumineux n'est pas inférieure à 20%.

Le matériau et la structure des espaceurs essentiellement transparents doivent aussi résister à la compression pour maintenir la distance entre les feuilles de verre même sous les contraintes imposées lors de la production des vitrages. Pour répondre à cette exigence les espaceurs réalisés dans ces matériaux essentiellement transparents doivent avantageusement présenter une compressibilité sous une charge de 1kg/cm² qui n'excède pas 5%. De préférence cette résistance à la compressibilité de 5% est atteinte sous une charge de 2,5kg/cm².

Le matériau de l'espaceur est choisi de façon à résister au contact de la composition de silicate dont le pH peut être de l'ordre de 10 ou plus. Dans ces conditions les propriétés du matériau, notamment ses propriétés optiques, ne doivent pas être altérées de façon significative même à une température telle que celles mises en oeuvre dans les opérations conduisant à la durcification de ce silicate. En pratique ces températures ne dépassent pas 100°C et le plus souvent ne sont pas supérieures à 70°C.

Les espaceurs des vitrages utilisés selon l'invention sont constitués notamment en polycarbonates, poly-méthacrylates, polystyrènes (sous réserve de dégagement de fumées indésirables à l'épreuve au feu) polyesters notamment PET, polyamides. Ces matériaux polymères sont avantageusement décomposés et carbonisés sans fumées toxiques. Les espaceurs transparents en matériaux polymères présentent le cas échéant l'avantage de pouvoir être mis en forme par extrusion ou moulage. Ils se prêtent aussi à la constitution des éléments constituant l'ensemble disposé à la périphérie des feuilles de verre ou à certains côtés de celles-ci, sans discontinuité entre les différents côtés de cette périphérie.

Il est aussi possible selon l'invention d'utiliser des espaceurs en verre minéraux. Ceux-ci offrent en outre l'avantage de pouvoir présenter une réaction au feu, notamment en termes de coefficient d'expansion, de même nature que celle des feuilles de verre du vitrage.

L'espaceur est de préférence sous forme d'un profilé dont la section droite comporte deux faces planes qui sont appliquées sur les faces correspondantes des feuilles de verre. La section peut être carrée, rectangulaire pleine ou tubulaire ou encore sous forme d'un U ou d'un H.

Les dimensions de la section de l'espaceur sont telles que la distance des deux feuilles de verre s'établit entre 2 et 18mm, et le plus souvent de 2 à 12mm.

En raison de la rigidité de l'espaceur et du fait qu'il est constitué d'un matériau qui le plus souvent n'est pas naturellement adhésif, il faut interposer une colle entre les feuilles de verre et l'espaceur. Cette colle bien qu'en faible épaisseur, permet aussi d'absorber les irrégularités de planéité de feuilles de verre, et garantit l'étanchéité de l'ensemble à la composition liquide de silicate.

La colle utilisée présente avantageusement, comme l'espaceur lui-même, une bonne transparence et est peu sensible au contact avec la solution de silicate. Bien que la surface de contact soit restreinte à une mince bande correspondant à l'épaisseur de cette couche de colle, il est préférable de choisir une colle essentiellement inerte à ce contact.

Il est possible de choisir comme colle un caoutchouc de butyle ou d'isobutylidène. Le choix de la colle la mieux adaptée répond encore au souhait d'une application commode sur les faces de l'espaceur. Cette colle doit être suffisamment souple contrairement à l'espaceur lui-même. L'usage de charges éventuelles utilisées dans les espaceurs antérieurs pour rigidifier ces produits n'est donc pas nécessaire, ce qui permet d'éviter certains inconvénients liés à ces charges. En particulier on évite la présence de carbone dans les colles butyle pour ne pas réduire leur transparence.

D'autres adhésifs peuvent aussi être mis en oeuvre pour autant qu'ils présentent des caractéristiques analogues ou meilleures que celles des colles de butyle ou d'isobutylène. Parmi des adhésifs possibles figurent notamment des résines acryliques, des colles de silicones. Eventuellement, compte tenu de la faible quantité mise en oeuvre, il est possible d'utiliser des polyuréthanes ordinairement exclus en raison des risques possibles de dégagements toxiques à l'épreuve au feu.

La colle est disposée entre les faces de l'espaceur et les feuilles de verre. L'épaisseur de la couche de colle est limitée à la quantité nécessaire pour assurer le contact et absorber les possibles inégalités de surface des feuilles de verre ou de l'espaceur lui-même. En pratique cette épaisseur avant pression sur les feuilles n'excède pas 1mm et de préférence pas 0,8mm.

En dehors de la colle fixant l'espaceur aux feuilles de verre et assurant l'étanchéité à la composition liquide de silicate alcalin, il est aussi usuel de disposer à la périphérie des feuilles au contact de l'espaceur, un joint qui conforte l'étanchéité et renforce le maintien des feuilles de verre. Ce joint est disposé contre la face de l'espaceur opposée à celle au contact de la composition de silicate. Traditionnellement ce joint est constitué d'un polysulfure ou d'une résine de silicone. Si ce joint n'est pas toujours aussi transparent que l'espaceur ou la colle utilisée, sa disposition à l'extrême bord du vitrage et son épaisseur relativement modeste ne constituent pas une gêne sensible par rapport à la transparence principale recherchée et qui demeure sur la très large majorité de la surface du vitrage.

Lorsque les parois selon l'invention sont soumises à l'épreuve du feu leur étanchéité nécessite que les vitrages contigus ne se désolidarisent pas les uns des autres sous l'effet des contraintes thermiques qui les déforment. Selon l'invention, pour cette raison, et particulièrement si les dimensions des bords de vitrages contigus sont relativement grandes, par exemple supérieures à 1m, il est avantageux de solidariser les bords de ces vitrages par des pièces rigides. Ces pièces, en particulier si elles s'étendent sur tout le long des bords des vitrages contigus sont avantageusement en un matériau essentiellement transparent tel qu'un verre minéral ou organique. L'utilisation de pièces non transparentes est également possible pour autant qu'elles ne s'étendent que de façon discrète sur ces bords, par exemple qu'elle ne soit individuellement pas de plus de 10cm de long, et disposées à intervalle d'au moins 50cm. Une telle disposition n'occulte qu'un minimum de la surface de la paroi transparente.

Les pièces de solidarisation peuvent être disposées par paires sur les faces opposées des vitrages contigus. Dans ce cas pour renforcer l'effet de maintien mécanique, les pièces d'une même paire sont avantageusement associées par des moyens mécaniques, rivets, vis ...

L'invention est décrite dans la suite en faisant référence aux figures illustrant certains aspects de l'invention :
- la figure 1 est une représentation schématique d'une paroi comportant plusieurs vitrages contigus ;
- la figure 2 est une vue schématique en coupe selon A-A des bords de deux vitrages contigus de la figure 1;
- la 3 analogue à la figure 1 comporte des éléments supplémentaires de solidarisation de vitrages ;
- la figure 4 est une coupe selon B-B du bord de vitrages de la paroi selon l'invention ;
- la figure 5 est une figure analogue à la figure 4 montrant un autre mode de solidarisation des vitrages de la paroi selon l'invention ;
- la figure 6 analogue à la figure 2, présente un espaceur de structure différente ;
- la figure 7 analogue à la figure 2, présente un espaceur de structure également différente ;
- les figures 8a et 8b illustrent un mode d'assemblage d'éléments d'espaceur aux coins du vitrage ;
- les figures 9a et 9b illustrent un autre mode de réalisation de jonction en coin d'éléments d'espaceur.

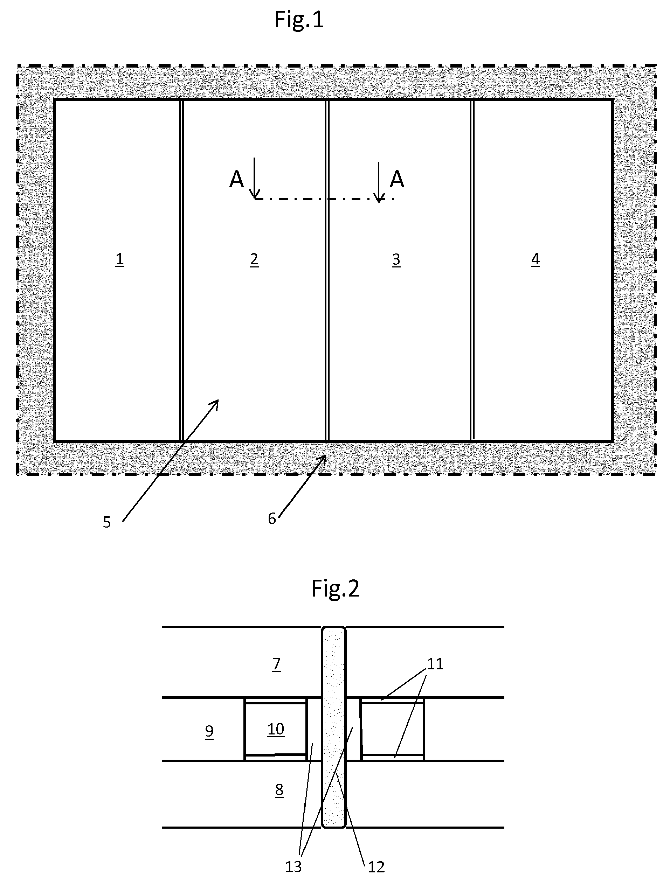

La figure 1 présente une paroi vitrée 5 prise dans une baie de bâtiment désignée globalement 6. La paroi 5 présentée comporte un ensemble de 4 vitrages, 1-4 disposés verticalement de façon contigüe. Les bords horizontaux des vitrages sont pris dans la structure de la baie par exemple une feuillure et une pare-close non représentées. Dans cette disposition les bords horizontaux du vitrage sont dissimulés au regard.

L'objet de l'invention dans cette configuration est de faire en sorte que l'ensemble des vitrages 1 à 4 de la paroi offre le moins possible d'obstacle à la transmission lumineuse.

La composition des vitrages anti-feu typiques mis en oeuvre selon l'invention est détaillée à propos de la figure 2.

Chacun des vitrages est constitué d'un ensemble de deux feuilles de verre transparent 7 et 8. Un espaceur 10, éventuellement composé de plusieurs éléments de même nature ou de nature différentes, disposé à la périphérie des feuilles, maintient les feuilles de verre à distance l'une de l'autre. L'espaceur rigide 10 est collé aux feuilles au moyen d'un film de colle 11, appliqué sur les faces de l'espaceur au contact des feuilles de verre. Le film de colle 11 de faible épaisseur est avantageusement transparent. Il s'agit par exemple de caoutchouc butyle ou isobutylidène.

L'ensemble de l'espaceur, ou des éléments qui le composent, et des feuilles de verre délimite un volume clos 9, dans lequel la composition de silicates alcalins, initialement à l'état liquide, est coulée jusqu'à remplir ce volume.

Les deux vitrages voisins sont situés dans un même plan, dans la continuité l'un de l'autre. Les bords de ces vitrages ne sont séparés que par un interstice limité. Pour assurer la continuité de l'étanchéité d'un vitrage au vitrage voisin, un joint 12 est disposé pour remplir cet interstice. Ce joint est avantageusement d'un matériau souple pouvant absorber de légères différences dans la largeur de cet espace.

Un caoutchouc de silicone constitue un exemple de matériau pour ce joint 12. Ce caoutchouc de silicone est de préférence transparent ou translucide.

La structure typique des vitrages comprenant un matériau intumescent à base de silicates alcalins coulé entre les feuilles de verre comporte aussi comme sur la figure 2 un revêtement 13 qui renforce le maintien des feuilles de verre et de l'espaceur. Ce revêtement est appliqué entre les feuilles de verre et sur l'espaceur 10. De préférence ce revêtement est contigu au joint 12. Le revêtement ou joint 13 est de préférence une résine de polysulfures.

Les compositions de silicates alcalins coulables qui se solidifient sans séchage sont sensiblement plus riches en eau que celles que l'on solidifie par séchage. Cette particularité modifie le caractère «réfractaire» des couches, et conditionne en partie leurs propriétés de résistance au feu. Pour renforcer ce caractère réfractaire atténué par cette teneur en eau, il est préférable de choisir des compositions dans lesquelles le rapport molaire SiO₂/M₂O, -M étant un alcalin, potassium ou sodium ou une combinaison des deux- est relativement élevé, à savoir supérieur à 4 et de préférence supérieur à 5. Les solutions commercialement disponibles de silicates alcalins sont de rapport molaire généralement moins élevé ce qui nécessite une préparation spécifique de ces compositions comme décrit par exemple dans la publication indiqué ci-dessus.

A titre d'exemple un matériau intumescent utilisé est constitué d'une solution de silicate de potassium dont le rapport molaire SiO₂/K₂O est de 5,3, la teneur en eau de 42% en poids. Cette composition comprend encore 6% en poids de glycérine, et 1% en poids d'hydroxyde de tétra-méthyl-ammonium (TMAH).

Cette composition n'est donnée qu'à titre d'exemple.

La production de ce type de compositions intumescentes utilisées est par exemple décrite dans les publications WO2007/107541 et WO2008/145611. Elle met en oeuvre l'utilisation de silice colloïdale soit ajoutée à des compositions de silicate disponibles dans le commerce, soit utilisée en réaction avec des hydroxydes alcalins.

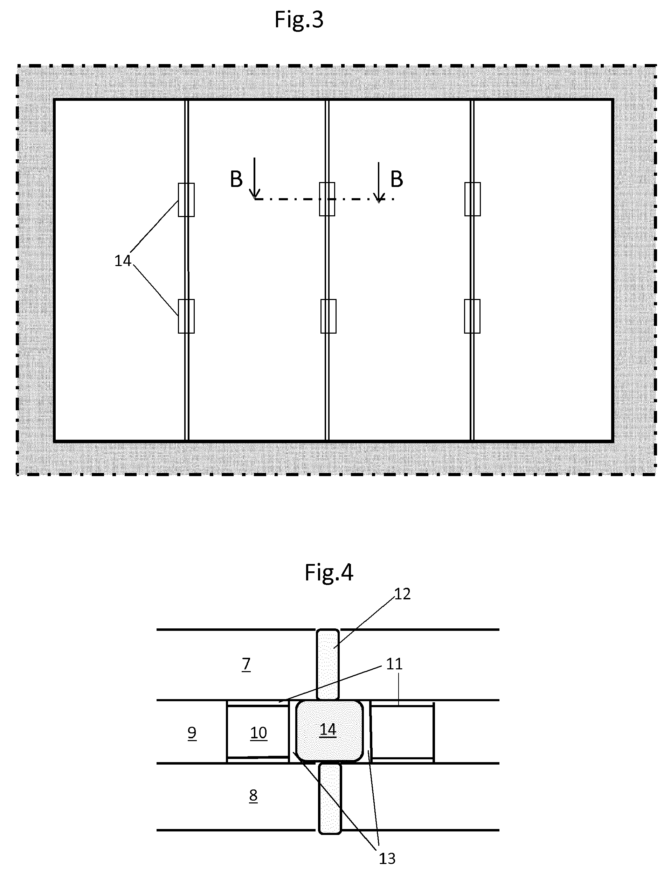

Dans l'exemple présenté aux figures 1 et 2 les vitrages ne comportent aucun élément de solidarisation en dehors du joint 12 qui ordinairement adhère aux chants des feuilles de verre. La structure présentée ne peut supporter de grands efforts qui s'exerceraient dans des directions qui ne soient pas dans le plan de ces feuilles. Ces structures sont satisfaisantes en particulier lorsque les dimensions verticales des vitrages, dans la disposition représentée, ne sont pas trop grandes. Dans ce cas les déformations subies au cours de l'épreuve au feu restent limitées. Pour des dimensions plus importantes, par exemple de plus d'un mètre, il est avantageux de disposer des moyens de solidarisation supplémentaires entre les vitrages voisins. C'est ce qui est donné en exemple aux figures 3, 4 et 5.

La figure 3 présente schématiquement des moyens de solidarisation de ce type 14, disposés le long des bords des vitrages contigus. Dans l'exemple présenté les moyens en question ne s'étendent que sur une courte longueur sur les bords des vitrages voisins. Le rôle de ces moyens est principalement de maintenir les vitrages sensiblement dans le même plan, même soumis à des contraintes thermiques. Bien évidemment ces moyens peuvent aussi s'étendre sur toute la longueur de ces bords.

Le choix de moyens de dimensions restreintes permet le cas échéant de les confectionner dans des matériaux qui n'offrent pas la transparence des autres constituants de ces parois.

Les moyens de solidarisation peuvent être disposés sur les faces externes des feuilles de verre des vitrages. Ils peuvent aussi se situer entre les feuilles de verre comme représenté en figure 4. Le moyen 14 dans cette représentation est constitué d'un barreau inséré entre les paires de feuilles des deux vitrages. L'assemblage par emboîtement maintient les vitrages sans qu'il soit nécessaire d'utiliser d'autres moyens de fixation ou de collage.

Le type d'assemblage proposé à la figure 4 peut comprendre un barreau 14 s'étendant sur toute la longueur du bord des vitrages. Cet élément peut aussi ne s'étendre que sur une ou plusieurs parties limitées de cette hauteur comme représenté à la figure 3.

Le barreau 14 est avantageusement d'un matériau transparent de même nature ou de nature différente de celle des espaceurs.

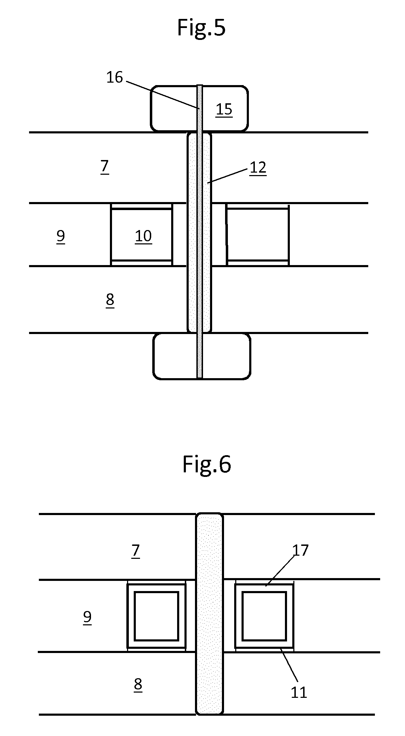

La figure 5 présente un autre ensemble de solidarisation des vitrages contigus. Dans cet ensemble les moyens 15 reposent sur les faces externes des feuilles de verre, de part et d'autre de celles-ci. Un tirant schématisé 16 relie les deux éléments. Ce tirant est fixé par tout moyen approprié usuel. Il s'agit par exemple d'un rivet, d'une tige filetée à ces extrémités et maintenue par des boulons non représentés, ou tout autre moyen analogue.

Comme précédemment les moyens 15 s'étendent sur un partie seulement des bords des vitrages ou sur toute leur longueur. Dans ce dernier cas notamment il est préféré d'utiliser des matériaux transparents pour les constituer.

Il est aussi possible de combiner les deux types de moyens de solidarisation présentés respectivement aux figures 4 et 5.

A la figure 2 l'espaceur 10 est de section carrée pleine. La figure 6 est analogue à la différence de la structure du profilé constituant l'espaceur. Dans le cas le profilé de l'espaceur est de type tubulaire 17. La mise en oeuvre de ce type de structure est ordinairement suffisante pour assurer la résistance à la compression exercée sur le vitrage au moment de son assemblage pour autant que les parois du profilé soient d'une épaisseur convenablement choisie. La structure tubulaire permet aussi de réduire l'épaisseur de matériau traversé par la lumière. Cette structure est donc favorable à la transmission lumineuse, et à l'obtention d'une certaine clarté (transmission et diffusion confondues), ou même à la bonne transparence de cet espaceur.

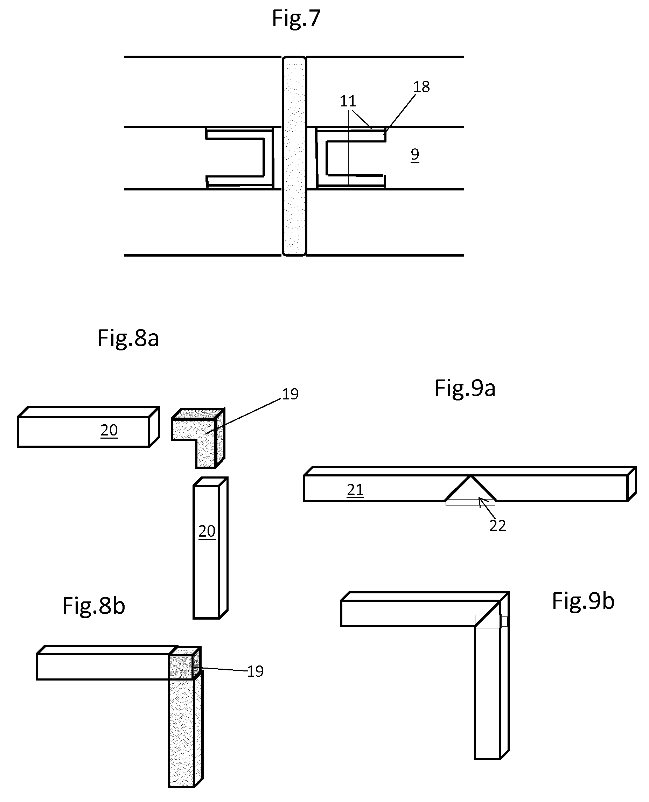

La figure 7 présente un autre type de profilé espaceur 18. Celui-ci présente une section générale en U ouvert du côté du matériau intumescent 9. Comme précédemment pour le profilé carré, les branches du U au contact du verre sont collées à ces feuilles par la couche de colle 11. La résistance à la pression est assurée cette fois uniquement par un seul côté de l'espaceur sensiblement perpendiculaire aux faces des feuilles de verre. La présence de la composition dans l'espaceur peut minimiser les différences de températures entre cet espaceur et la composition dans les épreuves au feu et limiter les risques de casse prématurée.

En pratique la mise en oeuvre d'un espaceur entièrement de même composition sur tout le pourtour du vitrage est souvent le plus commode. Néanmoins la transparence n'est pas nécessairement recherchée sur toute la périphérie. C'est le cas en particulier lorsque l'un ou plusieurs côtés du vitrage se trouvent disposés dans un cadre qui lui-même n'est pas transparent. Une telle disposition peut se trouver par exemple dans les parties assurant la fixation du vitrage à une structure du bâtiment comme représenté à la figure 1. Selon le cas l'espaceur transparent peut donc ne concerner qu'un ou plusieurs côtés de la périphérie du vitrage.

Quel que soit le profil de l'espaceur, celui-ci doit assurer l'étanchéité sur le pourtour des feuilles, y compris dans les coins du vitrage. Selon la nature du matériau cette étanchéité est obtenue par collage soudure ou d'autres moyens assurant la continuité de l'espaceur. Ces moyens sont également mis en oeuvre dans les vitrages comportant des éléments d'espaceurs de natures différentes comme indiqué plus haut.

Les figures 8a et 8b illustrent un mode d'assemblage en coin pour un ensemble d'éléments d'espaceur de type tubulaire. Profitant de cette structure tubulaire, l'assemblage est obtenu par exemple par l'introduction d'un élément 19 indépendant des éléments 20, aux extrémités de ceux-ci. L'élément 19 peut être constitué du même matériau que les éléments 20, ou d'un matériau différent mais de préférence présentant aussi une certaine transparence. Bien que non représentée, l'élément 19 peut avoir une feuillure de l'épaisseur et de la profondeur d'emboîtement, de telle sorte que l'épaisseur de l'ensemble soit constante, y compris dans ce coin, favorisant l'étanchéité sans avoir recours à une surépaisseur de colle à cet endroit.

Les figures 9a et 9b présentent un autre mode de réalisation d'un coin d'espaceur. Dans ce mode l'espaceur 21, par exemple de structure tubulaire ou en U est entaillé en 22 pour ne conserver dans le coin, que la paroi de l'espaceur tournée vers l'extérieur. L'espaceur est ensuite replié comme en 9b, la paroi externe assurant la continuité. Eventuellement l'étanchéité est complétée par l'application de la colle sur la ligne constituée par les bords contigus des deux parties rapprochées par le pliage.

Les assemblages présentés ci-dessus ne sont que des exemples parmi beaucoup d'autres possibles. En particulier il est aussi possible de coller les éléments les uns aux autres, une extrémité d'un élément venant au contact et étant collé ou soudé à la face interne de l'élément voisin. Cette disposition est facilitée dans le cas d'espaceurs dont la section est pleine.

Des matériaux utilisés selon l'invention pour constituer les espaceurs transparents sont par exemple des barres carrées en polyméthacrylate. Ces espaceurs ont un indice de réfraction de l'ordre de 1,49, très voisin des verres silico-sodo-calciques clairs (n=1,5) et une transparence même supérieure. Sous 10mm la TL dans le visible est d'environ 90-92%, contre 87% pour le verre. Un autre matériau transparent utilisable selon l'invention est constitué par les polycarbonates connus pour leur utilisation en verres d'optiques. Leur indice de réfraction est aussi voisin de celui du verre, de l'ordre de 1,59, et leur transmission lumineuse dans le visible sous l'épaisseur de référence de 10mm est supérieure à 85%.

Pour ces propriétés optiques ces matériaux correspondent bien aux exigences de l'invention, mais celle-ci ne se limite pas à ces exemples.

## Revendications

1. Paroi vitrée (5) comportant au moins deux vitrages (1-4) disposés bord à bord ces vitrages résistant au feu et comprenant chacun deux feuilles de verre (7,8) entre lesquelles se trouve un matériau intumescent (9) à base de silicate alcalin hydraté, les deux feuilles de verre étant réunies à leur périphérie par un ensemble d'éléments espaceurs (10) délimitant entre ces deux feuilles un espace dans lequel une composition liquide du silicate alcalin est versée de manière à remplir cet espace, la composition étant choisie pour conduire à un gel solide éventuellement cette solidification étant accélérée par une élévation de température ou une exposition à des rayons UV ou IR, les éléments délimitant cet espace étant étanches à la composition liquide de silicates, ces éléments comportant au moins sur les bords des vitrages contigus des éléments d'espaceurs (10) rigides ou semi-rigides constitués dans un matériau essentiellement transparent à la lumière visible.

2. Paroi vitrée selon la revendication 1 dans laquelle les bords des vitrages contigus sont distants l'un de l'autre d'au plus 7mm et de préférence d'au plus 5mm, un joint (12) adhérant aux deux bords des vitrages voisins, ce joint étant au moins translucide.

3. Paroi vitrée selon la revendication 2 dans laquelle le joint (12) translucide présente une transmission du flux lumineux qui n'est pas inférieure à 20%.

4. Paroi vitrée selon la revendication précédente dans laquelle le joint translucide (12) est constitué dans un caoutchouc de silicone.

5. Paroi vitrée selon l'une des revendications précédentes dans laquelle les vitrages sur leurs bords contigus comportent au moins sur une partie de ces bords des moyens (14,15) solidarisant les vitrages voisins.

6. Paroi selon la revendication 5 dans laquelle les moyens de solidarisation (14,15) sont en matériau essentiellement transparent.

7. Paroi selon l'une des revendications 5 ou 6, dans laquelle les moyens de solidarisation (14) sont insérés entre les feuilles de verre des bords contigus des vitrages.

8. Paroi selon l'une des revendications 5 ou 6, dans laquelle les moyens de solidarisation (15) sont appliqués sur les faces externes des vitrages contigus, et s'étendent sur une longueur limitée de ces bords.

9. Paroi selon la revendication 10 dans laquelle les moyens de solidarisation (15) sont disposés par paires situées sur les faces extérieures des vitrages.

10. Paroi selon la revendication 9 dans laquelle les paires de moyens de solidarisation (15) sont maintenus par des moyens (16) de fixation s'étendant dans l'espace entre les bords contigus des vitrages.

11. Paroi selon l'une des revendications précédentes dans laquelle les éléments d'espaceur (10,17,18) sont collés aux feuilles de verre au moyen d'une colle (11) essentiellement transparente.

12. Paroi selon l'une des revendications précédentes dans laquelle un joint (13) est appliqué contre les éléments d'espaceur (10,17,18), ce joint renforçant la fixation des feuilles de verre (1,2).

13. Paroi vitrée selon l'une des revendications précédentes dans laquelle le matériau des éléments transparents de l'espaceur (10,17,18) présente une transmission lumineuse directe et diffusée qui est au moins de 50% du flux incident.

14. Paroi vitrée selon l'une des revendications précédentes dans laquelle le matériau des éléments transparents de l'espaceur (10,17,18) est choisi de telle sorte qu'il présente une transmission lumineuse TL qui n'est pas inférieure à 50%, et de préférence pas inférieure à 60% sous une épaisseur de 10mm.

15. Paroi vitrée selon l'une des revendications précédentes dans laquelle le matériau des éléments transparents de l'espaceur (10,17,18) est choisi de telle sorte que sous l'épaisseur de 10mm il présente une diffusion lumineuse qui n'est pas supérieure à 60% et de préférence pas supérieure à 30%.

16. Paroi vitrée selon l'une des revendications précédentes dans laquelle le matériau de l'espaceur (10,17,18) est l'un de ceux comprenant les poly-méthacrylates (PMMA), les polycarbonates, les polystyrènes, les polyamides, les polyesters.
